# EUROPÄISCHE PATENTSCHRIFT

(11) **EP 1 666 540 B1**
(45) Veröffentlichungstag und Bekanntmachung des Hinweises auf die Patenterteilung: **26.03.2008**
(21) Anmeldenummer: 05111461.9
(22) Anmeldetag: 29.11.2005
(51) Int. Cl.: C09B 67/22, C09D 11/02

(54) **Mischungen von faserreaktiven Azofarbstoffen, Verfahren zu deren Herstellung und ihre Verwendung**
Mixtures of fibre-reactive azo dyes, process for their preparation and their use
Mélanges de colorants azoïques réactifs sur la fibre, procédé pour leur préparation et leur utilisation

(30) Priorität: 02.12.2004 DE 102004058151
(43) Veröffentlichungstag der Anmeldung: 07.06.2006
(73) Patentinhaber: DyStar Textilfarben GmbH & Co. Deutschland KG, 65926 Frankfurt am Main (DE)
(72) Erfinder: Meier, Stefan, 60529 Frankfurt (DE); Reiher, Uwe, 65719 Hofheim (DE); Russ, Werner, 65439 Flörsheim-Weilbach (DE); Schumacher, Christian, 65779 Kelkheim (DE)

(56) Entgegenhaltungen:
- EP-A- 1 000 982
- US-B1- 6 171 349
- PATENT ABSTRACTS OF JAPAN Bd. 1996, Nr. 02, 29. Februar 1996 (1996-02-29) & JP 07 258573 A (MITSUBISHI KASEI HOECHST KK), 9. Oktober 1995 (1995-10-09)

## Beschreibung

Die Erfindung liegt auf dem technischen Gebiet der faserreaktiven Azofarbstoffe

In der Patentliteratur sind zahlreiche faserreaktive Farbstoffe beschrieben, die sich zum Färben oder Bedrucken von hydroxy- und/oder carbonamidgruppenhaltigen Fasern, wie insbesondere Cellulosefasern, zur Erzeugung von gelben Färbungen eignen. Von diesen Farbstoffen sind insbesondere diejenigen von technischem Interesse, die aus den Dokumenten DE 3102287, US 5,298,607 und aus der EP 0021105 bekannt sind. Diese herkömmlichen gelb färbenden Farbstoffe genügen jedoch nicht in ausreichendem Umfang den neuesten Anforderungen hinsichtlich ihrer Verwendung in speziellen Färbeverfahren, der Färbbarkeit von Fasern und der Echtheitseigenschaften der mit ihnen erhältlichen Färbungen.
In dem Dokument DE 19851497 sind weiterhin gelb färbende faserreaktive Farbstoffmischungen beschrieben, die jedoch im Aufbau- und Fixiervermögen, in der Wasserlöslichkeit und Lagerstabilität und in den Echtheitseigenschaften der Färbungen verbesserungswürdig sind.

Aufgabe der vorliegenden Erfindung ist es daher, faserreaktive Farbstoffe zu finden, deren färberisches Verhalten, wie beispielsweise deren Aufbau- und Fixiervermögen, gegenüber den bekannten Farbstoffen verbessert ist und die zudem eine bessere Wasserlöslichkeit und Lagerstabilität besitzen und deren Färbungen verbesserte Echtheitseigenschaften aufweisen und gut reproduzierbar sind.

Mit der vorliegenden Erfindung wurden nunmehr Farbstoffmischungen gefunden, die diese Anforderungen erfüllen und die überraschenderweise deutlich bessere Echtheitseigenschaften besitzen, wobei die alkalische Nasslichtechtheit sowie die Chlorechtheit besonders hervorzuheben sind.

Die Erfindung betrifft somit Farbstoffmischungen, enthaltend einen Farbstoff der nachstehend angegebenen und definierten allgemeinen Formel (1) und einen Farbstoff der nachstehend angegebenen und definierten allgemeinen Formel (2) 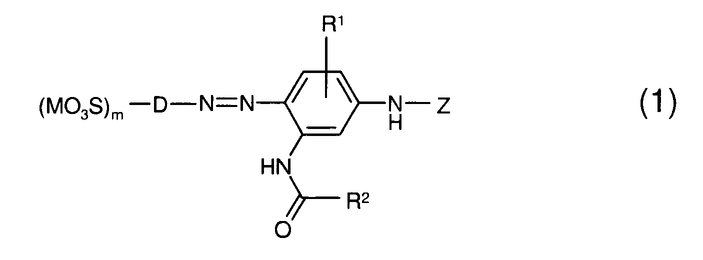 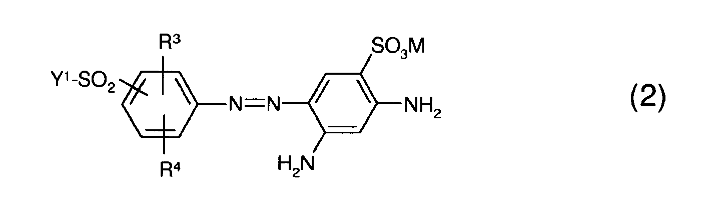 in welchen bedeuten:
- M: ist Wasserstoff oder ein Alkalimetall, wie Natrium, Kalium oder Lithium;
- m: ist die Zahl 1, 2 oder 3, bevorzugt 2 oder 3;
- D: ist der Rest des Benzols oder Naphthalins;
- Y¹: ist Vinyl oder Ethyl, das in β-Stellung durch einen alkalisch eliminierbaren Substituenten substituiert ist, wie beispielsweise durch Chlor, Sulfato, Thiosulfato, Phosphato, Alkanoyloxy von 2 bis 5 C-Atomen, wie Acetyloxy, und Sulfobenzoyloxy, und ist bevorzugt Vinyl und Sulfatoethyl;
- R¹: ist Wasserstoff, Alkyl von 1 bis 4 C-Atomen, Alkoxy von 1 bis 4 C-Atomen oder Sulfo;
- R²: ist Amino oder Alkyl von 1 bis 4 C-Atomen oder durch Carboxy, Sulfo oder eine Gruppe

- SO₂ - Y²

substituiertes Alkyl von 1 bis 4 C-Atomen bedeutet, wobei Y² eine der Bedeutungen von Y¹ hat
- R³: ist Wasserstoff, Chlor, Alkyl von 1 bis 4 C-Atomen, wie Ethyl und insbesondere Methyl, Alkoxy von 1 bis 4 C-Atomen, wie Ethoxy und insbesondere Methoxy, oder Sulfo,
- R⁴: ist Wasserstoff, Alkyl von 1 bis 4 C-Atomen oder Alkoxy von 1 bis 4 C-Atomen,
- Z: ist ein faserreaktiver Rest aus der Reihe der Halogenpyrimidine, der Dichlorchinoxaline oder der Halogentriazine, der gegebenenfalls einen Rest der allgemeinen Formel

-NR⁵-B-SO₂ - Y

trägt, worin
R⁵ Wasserstoff, C₁-C₄ Alkyl ist,
B C₂-C₄-Alkylen, oder ein gegebenenfalls durch ein Heteroatom unterbrochenes C₄-C₆ Alkylen, oder Phenylen bedeutet und
Y eine der Bedeutungen von Y¹ hat

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO3M, Thiosulfatogruppen Gruppen entsprechend der allgemeinen Formel -S-SO3M, Carboxygruppen Gruppen entsprechend der allgemeinen Formel -COOM, Phosphatogruppen Gruppen entsprechend der allgemeinen Formel -OPO3M2 und Sulfatogruppen Gruppen entsprechend der allgemeinen Formel -OSO3M, jeweils mit M der obengenannten Bedeutung.

Für M stehendes Alkali ist insbesondere Lithium, Natrium und Kalium. Bevorzugt steht M für Wasserstoff oder Natrium.

Bevorzugt beträgt in den erfindungsgemäßen Mischungen das molare Verhältnis von Farbstoff (1) zu Farbstoff (2) von 90:10 bis 50:50, besonders bevorzugt von 80:20 bis 60:40

Die Farbstoffe der allgemeinen Formel (1) sind beispielsweise aus den Dokumenten DE3102287, US5298607 und EP0021105 bekannt. Farbstoffe der allgemeinen Formel (2) sind in der Anmeldung DE1911427 beschrieben und können analog den dort gemachten Angaben hergestellt werden.

In den erfindungsgemäßen Farbstoffmischungen sind bevorzugte Farbstoffe der allgemeinen Formel (2) solche, in welchen der Rest (MO₃S)ₘ-D- für Monosulfophenyl, Disulfophenyl, Disulfonaphth-2-yl und Trisulfonapth-2-yl steht, hiervon sind besonders bevorzugt die Reste 2-Sulfo-phenyl-, 2,5-Disulfo-phenyl, 2,4-Disulfo-phenyl, 4,8-Disulfonaphth-2-yl, 6,8-Disulfo-naphth-2-yl und 5,7-Disulfo-naphth-2-yl, 3,6,8-Trisulfo-naphth-2-yl und 4,6,8-Trisulfo-naphth-2-yl.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wäßriger Lösung zwischen 3 und 7 einzustellen vermögen, wie beispielsweise Natriumacetat, Natriumcitrat, Natriumborat, Natriumhydrogencarbonat, Natriumdihydrogenphosphat undDinatriumhydrogenphosphat, außerdem Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise Schimmel verhütende Mittel.

In fester Form liegen die erfindungsgemäßen Farbstoffmischungen im Allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt.

Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole.

Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, beispielsweise im Verhältnis Ware zu Flotte von 1 : 5 bis 1 : 100, bevorzugt 1 : 6 bis 1 : 30, unter Verwendung von verschiedensten Säure bindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, dass man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschten falls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes Säure bindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C,. Neben dem üblichen Wasserdampf von 101 bis 103°C kann auch überhitzter Dampf und Druckdampf von Temperaturen bis zu 160°C eingesetzt werden.

Die Säure bindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche Säure bindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hervorragende Farbstärke aus, die teilweise auch in Gegenwart keiner oder nur sehr geringer Alkali- oder Erdalkaliverbindungen erreicht werden kann. In diesen speziellen Fällen benötigt man beispielsweise für eine geringe Farbtiefe kein Elektrolytsalz, für eine mittlere Farbtiefe nicht mehr als 5g/l an Elektrolytsalz und für große Farbtiefen nicht mehr als 10 g/l an Elektrolytsalz.

Eine geringe Farbtiefe bezeichnet hierbei den Einsatz von 2 Gew-% Farbstoff bezogen auf das zu färbende Substrat, eine mittlere Farbtiefe bezeichnet den Einsatz von 2 bis 4 Gew-% Farbstoff bezogen auf das zu färbende Substrat und eine große Farbtiefe bezeichnet den Einsatz von 4 bis 10 Gew.-% Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Nassechtheiten, wie Wasch-, Walk-, Wasser-, Seewasser-, Überfärbe- und saure sowie alkalische Schweißechtheiten, des weiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Nassechtheiten, zumal sich nicht fixierte Farbstoffanteile wegen ihrer guten Kaltwasserlöslichkeit leicht auswaschen lassen.

Charakteristisch für die mit den erfindungsgemäßen Farbstoffmischungen erhältlichen Färbungen und Drucke sind deren sehr gute alkalische Nasslichtechtheit sowie die hervorragende Chlorechtheit.

Des Weiteren können die erfindungsgemäßen Farbstoffmischungen auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozess unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die oben genannten Farbstoffmischungen können auch in Drucktinten für den digitalen Textildruck formuliert werden.

Die erfindungsgemäßen Drucktinten enthalten eine oder mehrere der genannten Reaktivfarbstoffmischungen, beispielsweise in Mengen von 0,1 Gew.-% bis 50 Gew.-%, bevorzugt in Mengen von 1 Gew.-% bis 30 Gew.-% und besonders bevorzugt in Mengen von 1 Gew.-% bis 15 Gew.-% bezogen auf das Gesamtgewicht der Tinte. Ebenfalls enthalten sein können Kombinationen der genannten Reaktivfarbstoffmischungen mit anderen Reaktivfarbstoffen, die im Textildruck Verwendung finden.

Für den Einsatz der Tinten im Continuous flow Verfahren kann durch Elektrolytzusatz eine Leitfähigkeit von 0,5 bis 25 mS/m eingestellt werden.

Als Elektrolyt eignen sich beispielsweise: Lithiumnitrat, Kaliumnitrat.

Die erfindungsgemäßen Farbstofftinten können organische Lösungsmittel mit einem Gesamtgehalt von 1-50%, bevorzugt von 5-30 Gew.-% enthalten.

Geeignete organische Lösungsmittel sind beispielsweise Alkohole, z. B. Methanol, Ethanol, 1-Propanol, Isopropanol, 1-Butanol, tert. Butanol, Pentylalkohol, mehrwertige Alkohole z. B.: 1,2-Ethandiol, 1,2,3-Propantriol, Butandiol, 1,3- Butandiol, 1,4-Butandiol, 1,2-Propandiol, 2,3-Propandiol, Pentandiol, 1,4-Pentandiol, 1,5-Pentandiol, Hexandiol, D,L-1,2-Hexandiol, 1,6-Hexandiol, 1,2,6-Hexantriol, 1,2- Octandiol, 2-(2- Methoxyethoxy)ethanol, 2-(2-Ethoxyethoxy)ethanol, 2-(2-Butoxyethoxy)ethanol, 2- (2-Propoxyethoxy)ethanol, Polyalkylenglykole, z. B.: Polyethylenglykol, Polypropylenglykol, Alkylenglykole mit 2 bis 8 Alkylengruppen, z. B.: Monoethylenglykol, Diethylenglykol, Triethylenglykol, Tetraethylenglykol, Thioglykol, Thiodiglykol, Butyltriglykol, Hexylenglykol, Propylenglykol, Dipropylenglykol, Tripropylenglykol, niedrige Alkylether mehrwertiger Alkohole, z. B.: Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykolmonohexylether, Triethylenglykolmonomethylether, Triethylenglykolmonobutylether, Tripropylenglykolmonomethylether, Tetraethylenglykolmonomethylether, Tetraethylenglykolmonobutylether, Tetraethylenglykoldimethylether, Propylenglykolmonomethylether, Propylenglykolmonoethylether, Propylenglykolmonobutylether, Tripropylenglykolisopropylether, Dimethoxypropan, Dioxan, Ethylpenthylether, Polyalkylenglykolether, wie z. B.: Polyethylenglokolmonomethylether, Polypropylenglykolglycerolether, Polyethylenglykoltridecylether, Polyethylenglykolnonylphenylether, Amine, wie z. B.: Methylamin, Ethylamin, Triethylamin, Diethylamin, Dimethylamin, Trimethylamin, Dibutylamin, Diethanolamin, Triethanolamin, N-Acetylethanolamin, N-Formylethanolamin, Ethylendiamin, Harnstoffderivate, wie z. B.: Harnstoff, Thioharnstoff, N-Methylharnstoff, N,N'- epsilon Dimethylharnstoff, Ethylenharnstoff, 1,1,3,3-Tetramethylharnstoff, Amide, wie z. B.: Dimethylformamid, Dimethylacetamid, Acetamid, Ketone oder Ketoalkohole, wie z. B.: Aceton, Diacetonalkohol, cyclische Ether, wie z. B.; Tetrahydrofuran, Trimethylolethan, Trimethylolpropan, 2- Butoxyethanol, Benzylalkohol, 2-Butoxyethanol, Gamma-butyrolacton, epsilon -Caprolactam, Pyridin, Piperidin ferner Sulfolan, Dimethylsulfolan, Methylsulfolan, 2,4-Dimethylsulfolan, Dimethylsulfon, Butadiensulfon, Dimethylsulfoxid, Dibutylsulfoxid, N-Cyclohexyl-Pyrrolidon, N-Methyl-2-Pyrrolidon, N-Ethyl-Pyrrolidon, 2-Pyrrolidon, 1-(2-Hydroxyethyl)-2-Pyrrolidon, 1-(3-Hydroxypropyl)-2-Pyrrolidon, 1,3-Dimethyl-2-imidazolidinon, 1,3- Dimethyl-2-imidazolinon, 1,3-Bismethoxymethylimidazolidin, Butyrolacton, Trimethylpropan, Ethylacetat, Ethylendiamintetraacetat. Weiterhin können die erfindungsgemäßen Drucktinten die üblichen Zusatzstoffe enthalten, wie beispielsweise Viskositätsmoderatoren um Viskositäten im Bereich von 1,5 bis 40,0 mPa.s in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas.

Als Viskositätsmoderatoren eignen sich rheologische Additive beispielsweise: Polyvinylcaprolactam, Polyvinylpyrrolidon sowie deren Co-Polymere Polyetherpolyol, Asoziativverdicker, Polyharnstoff, Polyurethan, Natriumalginate, modifizierte Galaktomannane, Polyetherharnstoff, Polyurethan, nichtionogene Celluloseether.

Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.

Als oberflächenaktive Substanzen eignen sich beispielsweise: Tenside aller Art, bevorzugt nichtionogene Tenside, Butyldiglykol, 1,2 Hexandiol.

Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.

Die Tinten können in üblicher Weise durch Mischen der Komponenten in Wasser hergestellt werden.

Die erfindungsgemäßen Farbstofftinten eignen sich für den Einsatz in Tintenstrahldruckverfahren zum Bedrucken der verschiedensten vorpräparierten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemäßen Drucktinten sind auch zum Bedrucken von vorbehandelten hydroxygruppenhaltigen bzw. aminogruppenhaltigen Fasern geeignet, die in Mischgeweben enthalten sind, z. B. von Gemischen aus Baumwolle, Seide, Wolle mit Polyesterfasern oder Polyamidfasern.

Im Gegensatz zum konventionellen Textildruck, bei dem die Druckfarbe bereits sämtliche Fixierchemikalien und Verdickungsmittel für einen Reaktivfarbstoff enthält, müssen beim Ink-Jet-Druck die Hilfsmittel in einem separaten Vorbehandlungsschritt auf das textile Substrat aufgebracht werden.

Die Vorbehandlung des textilen Substrates, wie zum Beispiel Cellulose- und Celluloseregeneratfasern sowie Seide und Wolle - erfolgt vor dem Bedrucken mit einer wässrigen alkalischen Flotte. Zur Fixierung von Reaktivfarbstoffen benötigt man Alkali, beispielsweise Natriumcarbonat, Natriumbicarbonat, Natriumacetat, Trinatriumphosphat, Natriumsilikat, Natriumhydroxid, Alkalispender wie zum Beispiel Natriumchloracetat, Natriumformiat, hydrotrope Substanzen wie zum Beispiel Harnstoff, Reduktionsinhibitoren, wie zum Beispiel Natriumnitrobenzolsulfonate, sowie Verdickungsmittel, die das Fliessen der Motive beim Aufbringen der Druckfarbe verhindern, dies sind beispielsweise Natriumalginate, modifizierte Polyacrylate oder hochveretherte Galaktomannane.

Diese Reagenzien zur Vorpräparierung werden mit geeigneten Auftragsgeräten, beispielsweise mit einem 2- oder 3-Walzenfoulard, mit berührungslosen Sprühtechnologien, mittels Schaumauftrag oder mit entsprechend angepassten Ink- Jet Technologien in definierter Menge gleichmässig auf das textile Substrat aufgebracht und anschliessend getrocknet.

Nach dem Bedrucken wird das textile Fasermaterial bei 120 bis 150 °C getrocknet und anschließend fixiert.

Die Fixierung der mit Reaktivfarbstoffen hergestellten Ink-Jet-Drucke kann erfolgen bei Raumtemperatur, oder mit Sattdampf, mit überhitztem Dampf, mit Heißluft, mit Mikrowellen, mit Infrarotstrahlung, mit Laser- oder Elektronenstrahlen oder mit anderen geeigneten Energieübertragungsarten.

Man unterscheidet ein- und zweiphasige Fixierungsprozesse:

Bei der einphasigen Fixierung befinden sich die zur Fixierung notwendigen Chemikalien bereits auf dem textilen Substrat.

Bei der zweiphasigen Fixierung kann diese Vorbehandlung unterbleiben. Zur Fixierung wird nur Alkali benötigt, das nach dem Ink-Jet-Druck vor dem Fixierprozess ohne Zwischentrocknung aufgebracht wird. Auf weitere Zusätze wie Harnstoff oder Verdickungsmittel kann verzichtet werden. Im Anschluss an die Fixierung wird die Drucknachbehandlung durchgeführt, die die Voraussetzung für gute Echtheiten, hohe Brillanz und einen einwandfreien Weißfond ist.

Die mit den erfindungsgemäßen Farbstofftinten hergestellten Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweißechtheiten, sowie eine gute Plissierechtheit, Bügelechtheit und Reibechtheit.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

1000 Teile einer wäßrigen Lösung mit 130 Teilen des nachstehend angegebenen Farbstoffes der Formel (A-1), wie eine Syntheselösung dieses Farbstoffes, und 1000 Teile einer wäßrigen Lösung mit 70 Teilen des nachstehend angegebenen Farbstoffes der Formel (B-1), wie einer Syntheselösung dieses Farbstoffes (mit M der obengenannten Bedeutung, bevorzugt Natrium) werden miteinander vermischt.

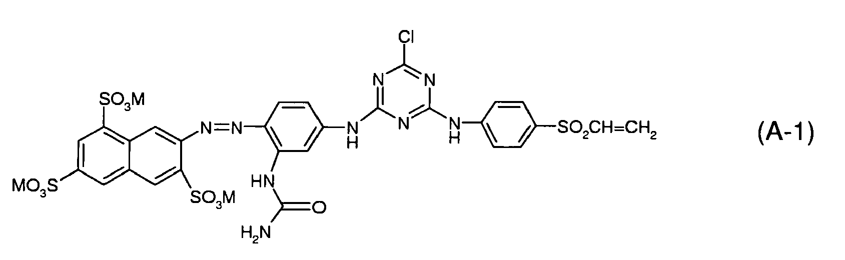

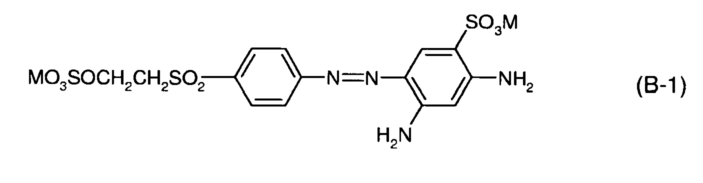

Man isoliert die erfindungsgemäße Farbstoffmischung in einem molaren Mischungsverhältnis des Farbstoffes (A-1) zu Farbstoff (B-1) von 60 : 40 aus der vereinigten Lösung in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung zeigt sehr gute färberische Eigenschaften und liefert beispielsweise auf cellulosischen Fasermaterialien, wie Baumwolle, oder Celluloseregeneratfasern in einem für faserreaktive Farbstoffe üblichen Auszieh-Färbeverfahren farbstarke und egale gelbe Färbungen, die eine gute Chlorechtheit besitzen.

### Beispiel 2

Man vermischt 1000 Teile einer wäßrigen Syntheselösung mit 150 Teilen des Farbstoffes der Formel (A-2) 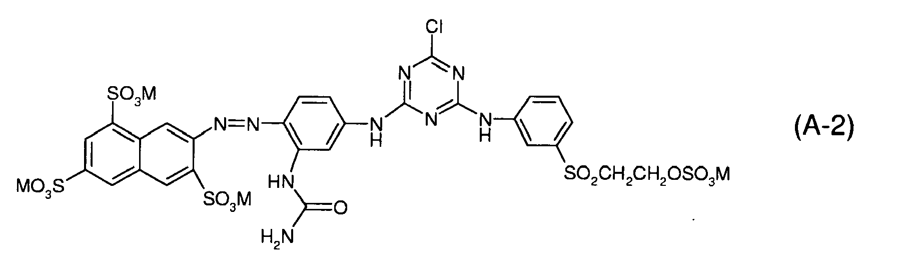 mit 500 Teilen einer wäßrigen Syntheselösung mit 31,4 Teilen des Farbstoffes der Formel (B-1) (in welchen M die obengenannte Bedeutung besitzt, bevorzugt Natrium ist) und isoliert die erfindungsgemäße Farbstoffmischung in üblicher Weise, beispielsweise durch Sprühtrocknung der Farbstofflösung. Die erhaltene erfindungsgemäße, aus der der Synthese stammende Elektrolytsalze, wie Natriumchlorid und Natriumsulfat, enthaltende Farbstoffmischung mit einem molaren Mischungsverhältnis des Farbstoffes (A-2) zu Farbstoff (B-1) von 70 : 30 zeigt sehr gute färberische Eigenschaften und liefert beispielsweise auf cellulosischen Fasermaterialien, wie Baumwolle, oder Celluloseregeneratfasern, in einem für faserreaktive Farbstoffe üblichen Klotz-Kaltverweil-Verfahren farbstarke und egale gelbe Färbungen, die eine gute Chlorechtheit besitzen.

### Beispiel 3

800 Teile einer wässrigen Lösung mit 147 Teilen des nachstehend angegebenen Farbstoffes der Formel (A-3) 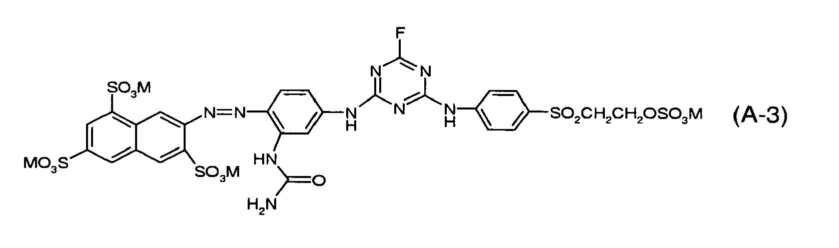 und 400 Teile einer wäßrigen Lösung mit 18,3 Teilen des Farbstoffes der Formel (B-1) werden miteinander vermischt.
Man isoliert die erfindungsgemäße Farbstoffmischung in einem molaren Mischungsverhältnis des Farbstoffes (A-3) zu Farbstoff (B-1) von 80 : 20 aus der vereinigten Lösung in üblicher Weise, beispielsweise durch Sprühtrocknung der Farbstofflösung. Die erhaltene erfindungsgemäße, aus der Synthese stammende Elektrolytsalze, wie Natriumchlorid und Natriumsulfat, enthaltende Farbstoffmischung zeigt sehr gute färberische Eigenschaften und liefert beispielsweise auf cellulosischen Fasermaterialien, wie Baumwolle, oder Culoseregeneratfasern, in einem für faserreaktive Farbstoffe üblichen Auszieh-Färbeverfahren farbstarke und egale gelbe Färbungen, die eine gute Chlorechtheit besitzen.

### Beispiele 4 bis 26

In den nachfolgenden Tabellenbeispielen sind weitere erfindungsgemäße Farbstoffmischungen mit Farbstoffen beschrieben, deren Formeln (mit M der oben angegebenen Bedeutung) im Anschluß an die Tabelle angegeben sind. Die Mischungen besitzen sehr gute anwendungstechnische Eigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke gelbe Färbungen und Drucke mit guten Echtheitseigenschaften und einem guten Farbaufbau.

**Tabelle:**

| Beispiel | Farbstoff (1) | Farbstoff (2) | molare Mischungsverhältnis von (1) : (2) |
|---|---|---|---|
| 4 | Formel (A-1) | Formel (B-2) | 60 : 40 |
| 5 | Formel (A-1) | Formel (B-3) | 65 : 35 |
| 6 | Formel (A-1) | Formel (B-4) | 80 : 20 |
| 7 | Formel (A-1) | Formel (B-7) | 80 : 20 |
| 8 | Formel (A-2) | Formel (B-2) | 75 : 25 |
| 9 | Formel (A-2) | Formel (B-3) | 70 : 30 |
| 10 | Formel (A-2) | Formel (B-7) | 70 : 30 |
| 11 | Formel (A-3) | Formel (B-2) | 75 : 25 |
| 12 | Formel (A-3) | Formel (B-7) | 65:25 |
| 13 | Formel (A-4) | Formel (B-1) | 65:35 |
| 14 | Formel (A-4) | Formel (B-2) | 65:35 |
| 15 | Formel (A-4) | Formel (B-5) | 70:30 |
| 16 | Formel (A-4) | Formel (B-6) | 65:35 |
| 17 | Formel (A-5) | Formel (B-1) | 80:20 |
| 18 | Formel (A-5) | Formel (B-2) | 80:20 |
| 19 | Formel (A-5) | Formel (B-5) | 75:25 |
| 20 | Formel (A-5) | Formel (B-6) | 70:30 |
| 21 | Formel (A-5) | Formel (B-7) | 60:40 |
| 22 | Formel (A-6) | Formel (B-1) | 65:35 |
| 23 | Formel (A-6) | Formel (B-2) | 60:40 |
| 24 | Formel (A-6) | Formel (B-4) | 60:40 |
| 25 | Formel (A-6) | Formel (B-5) | 80:20 |
| 26 | Formel (A-7) | Formel (B-1) | 75:25 |
| 27 | Formel (A-7) | Formel (B-2) | 75:25 |
| 28 | Formel (A-7) | Formel (B-4) | 75:25 |
| 29 | Formel (A-7) | Formel (B-7) | 70:30 |
| 30 | Formel (A-8) | Formel (B-1) | 70:30 |
| 31 | Formel (A-8) | Formel (B-2) | 70:30 |
| 32 | Formel (A-8) | Formel (B-4) | 70:30 |
| 33 | Formel (A-8) | Formel (B-6) | 70:30 |
| 34 | Formel (A-9) | Formel (B-1) | 80:20 |
| 35 | Formel (A-9) | Formel (B-2) | 80:20 |
| 36 | Formel (A-10) | Formel (B-1) | 80:20 |
| 37 | Formel (A-10) | Formel (B-2) | 75:25 |
| 38 | Formel (A-10) | Formel (B-7) | 75:25 |

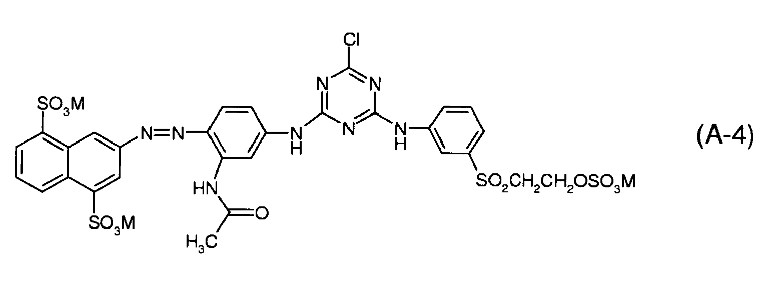

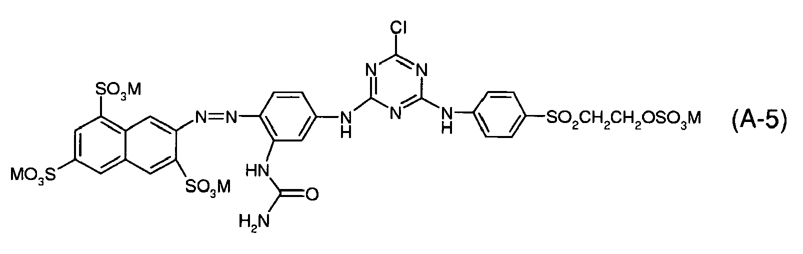

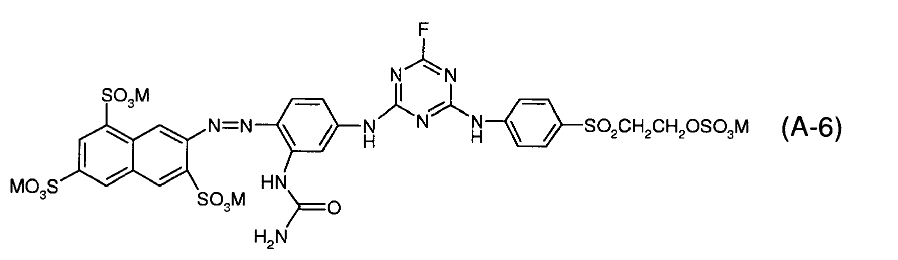

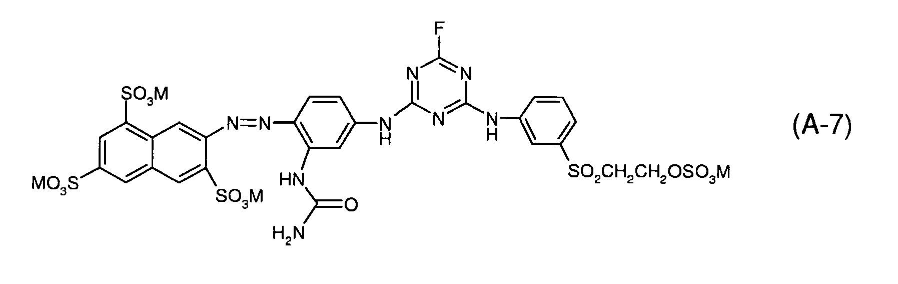

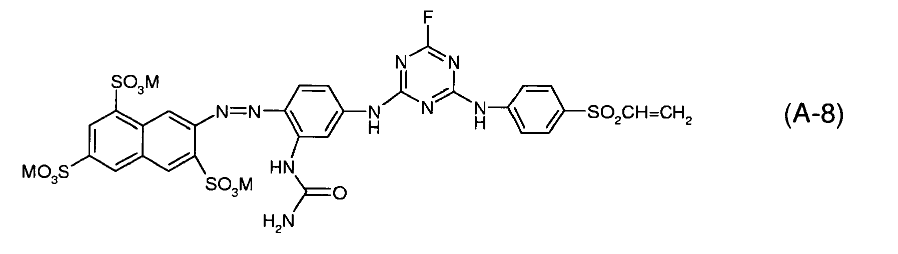

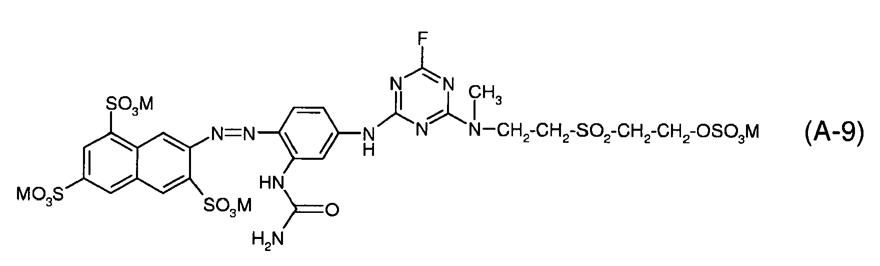

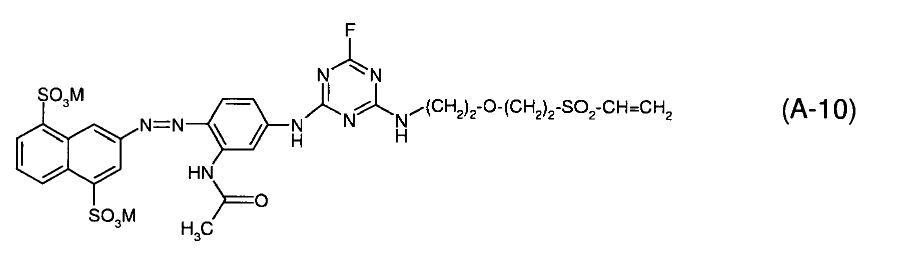

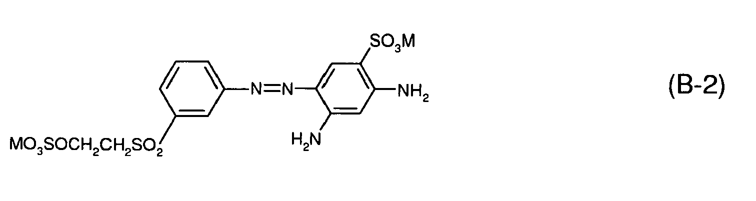

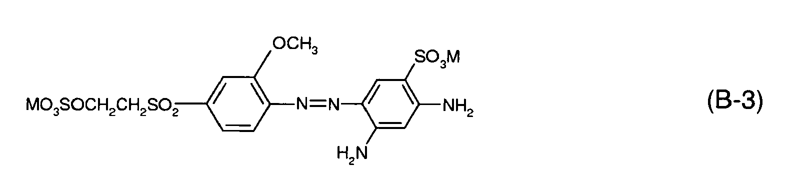

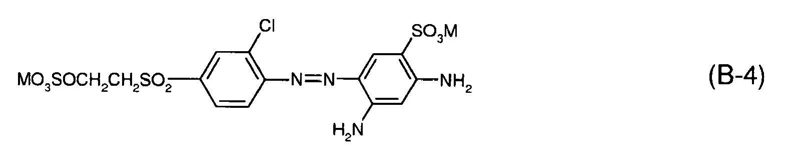

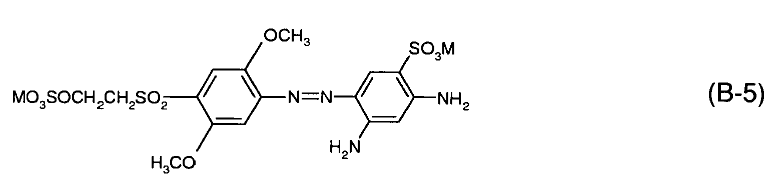

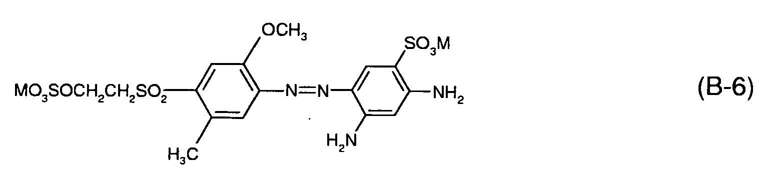

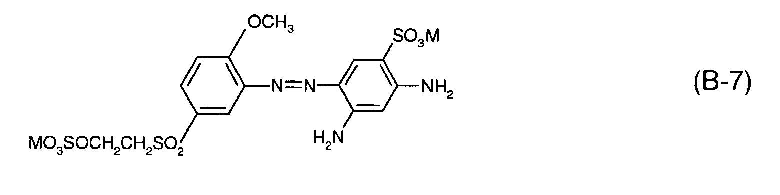

## Patentansprüche

1. Farbstoffmischungen, enthaltend einen Farbstoff der nachstehend angegebenen und definierten allgemeinen Formel (1) 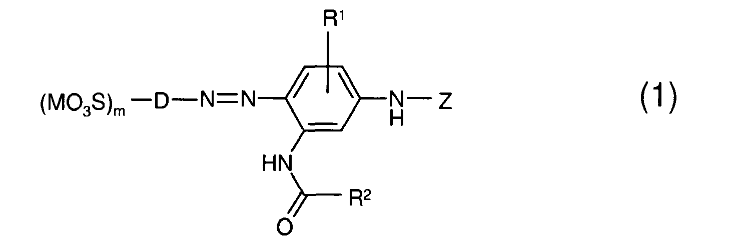 und einen Farbstoff der nachstehend angegebenen und definierten allgemeinen Formel (2) 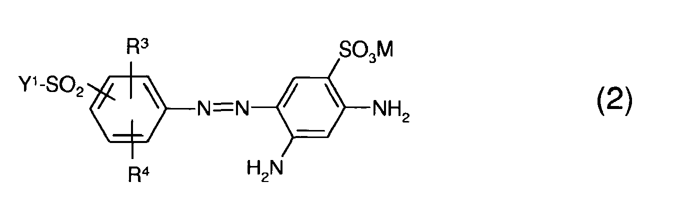 in welchen bedeuten:
M ist Wasserstoff oder ein Alkalimetall;
m ist die Zahl 1, 2 oder 3,
D ist der Rest des Benzols oder Naphthalins;
Y¹ ist Vinyl oder Ethyl, das in β-Stellung durch einen alkalisch eliminierbaren Substituenten substituiert ist;
R¹ ist Wasserstoff, Alkyl von 1 bis 4 C-Atomen, Alkoxy von 1 bis 4 C-Atomen oder Sulfo;
R² Amino oder Alkyl von 1 bis 4 C-Atomen oder durch Carboxy, Sulfo oder eine Gruppe
-SO₂-Y²
substituiertes Alkyl von 1 bis 4 C-Atomen bedeutet, wobei Y² eine der Bedeutungen von Y¹ hat,
R³ ist Wasserstoff, Chlor, Alkyl von 1 bis 4 C-Atomen, Alkoxy von 1 bis 4 C-Atomen, oder Sulfo,
R⁴ ist Wasserstoff, Alkyl von 1 bis 4 C-Atomen oder Alkoxy von 1 bis 4 C-Atomen,
Z ist ein faserreaktiver Rest aus der Reihe der Halogenpyrimidine, der Dichlorchinoxaline oder der Halogentriazine, der gegebenenfalls einen Rest der allgemeinen Formel
-NR⁵-B-SO₂ - Y
trägt, worin
R⁵ Wasserstoff oder C₁-C₄ Alkyl ist,
B C₂-C₄-Alkylen, oder ein gegebenenfalls durch ein Heteroatom unterbrochenes C₄-C₆ Alkylen, oder Phenylen bedeutet und
Y eine der Bedeutungen von Y¹ hat

2. Farbstoffmischungen, gemäß Anspruch 1 enthaltend einen Farbstoff der nachstehend angegebenen und definierten allgemeinen Formel (1) und einen Farbstoff der nachstehend angegebenen und definierten allgemeinen Formel (2) 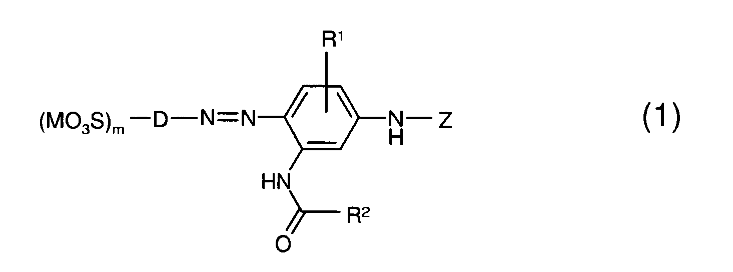 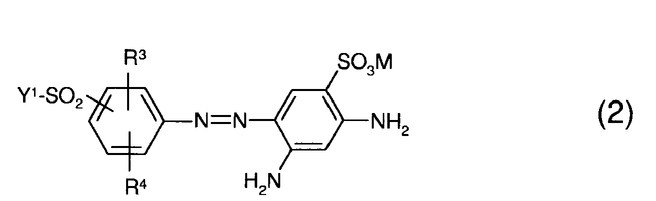
M Wasserstoff oder Natrium, Kalium oder Lithium ist;
D ist der Rest des Benzols oder Naphthalins;
m die Zahl 2 oder 3 ist;
Y¹ Vinyl oder Ethyl ist, das in β-Stellung durch Chlor, Sulfato, Thiosulfato, Phosphato substituiert ist, oder Acetyloxy, und Sulfobenzoyloxy bedeutet,
R¹ ist Wasserstoff, Alkyl von 1 bis 4 C-Atomen, Alkoxy von 1 bis 4 C-Atomen oder Sulfo;
R² Amino oder Alkyl von 1 bis 4 C-Atomen oder durch Carboxy, Sulfo oder eine Gruppe
- SO₂-Y²
substituiertes Alkyl von 1 bis 4 C-Atomen bedeutet, wobei Y² eine der Bedeutungen von Y¹ hat
R³ Wasserstoff, Methyl, Methoxy, Ethoxy, Chlor oder Sulfo ist
R⁴ ist Wasserstoff, Alkyl von 1 bis 4 C-Atomen oder Alkoxy von 1 bis 4 C-Atomen,
Z ist ein faserreaktiver Rest aus der Reihe der Halogenpyrimidine, der Dichlorchinoxaline oder der Halogentriazine, der gegebenenfalls einen Rest der allgemeinen Formel
-NR⁵-B-SO₂ - Y
trägt, worin
R⁵ Wasserstoff oder C₁-C₄ Alkyl ist,
B C₂-C₄-Alkylen, oder ein gegebenenfalls durch ein Heteroatom unterbrochenes C₄-C₆ Alkylen, oder Phenylen bedeutet und
Y eine der Bedeutungen von Y¹ hat

3. Farbstoffmischung nach Anspruch 1 oder 2, wobei
R² Methyl oder Amino ist
R³ Wasserstoff, Methyl, Methoxy oder Chlor ist
R⁴ Wasserstoff und
Y¹ Vinyl oder β-Sulfatoethyl bedeuten.

4. Farbstoffmischung nach Anspruch 1 oder 2, wobei R¹ in para-Stellung zur Gruppe -NH-CO-R² steht.

5. Farbstoffmischung nach mindestens einem der Ansprüche 1 bis 4, **dadurch gekennzeichnet, dass** der Farbstoff (1) und der Farbstoff (2) in einem molaren Mischungsverhältnis von 80 : 20 bis 60 : 40 vorliegen.

6. Verwendung einer Farbstoffmischung von Anspruch 1 zum Färben und Bedrucken von hydroxy-und/oder carbonamidgruppenhaltigem Material, insbesondere Fasermaterial.

7. Verfahren zum Färben von hydroxy und/oder carbonamidgruppenhaltigem Material, insbesondere Fasermaterial, bei welchem man einen oder mehrere Farbstoffe auf das Material aufbringt und diese auf dem Material mittels Wärme oder mit Hilfe eines alkalisch wirkenden Mittels oder mittels beider Maßnahmen fixiert, **dadurch gekennzeichnet, daß** man als Farbstoffe eine Farbstoffmischung von Anspruch 1 einsetzt.

8. Wässrige Drucktinten für den Textildruck nach dem Ink-Jet-Verfahren, **dadurch gekennzeichnet, dass** sie eine oder mehrere Farbstoffmischungen aus den Ansprüchen 1 bis 5 in Mengen von 0,01 Gew.% bis 40 Gew.% bezogen auf das Gesamtgewicht der Tinten enthalten.

9. Wässrige Drucktinten für den Textildruck nach dem Ink-Jet-Verfahren nach dem Anspruch 8, **dadurch gekennzeichnet, dass** sie 1 bis 40% organische Lösungsmittel bezogen auf das Gesamtgewicht der Tinte enthalten.

10. Wässrige Drucktinten für den Textildruck nach dem Ink-Jet-Verfahren nach dem Anspruch 9, **dadurch gekennzeichnet, dass** sie 10 bis 30% organische Lösungsmittel bezogen auf das Gesamtgewicht der Tinte enthalten.

11. Verfahren zum Bedrucken von textilen Fasermaterialien nach dem Ink-Jet-Verfahren, **dadurch gekennzeichnet, dass** man eine der in den obigen Ansprüchen genannten Tinten verwendet.

12. Native oder regenerierte Cellulosefasern, Leder, Wolle, Seide, Polyamid- oder Polyurethanfasern, die mit den in den obigen Ansprüchen genannten Tinten digital bedruckt worden sind.

## Claims

1. Dye mixtures comprising a dye of the hereinbelow indicated and defined general formula (1) 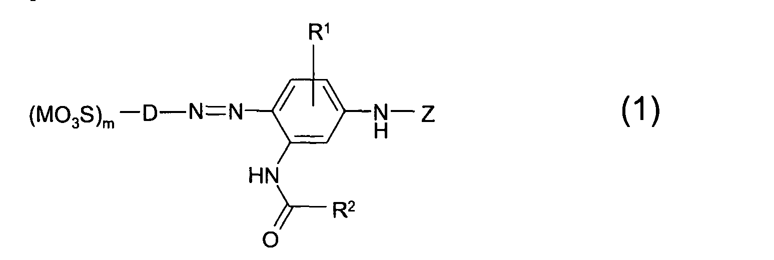 and a dye of the hereinbelow indicated and defined general formula (2) 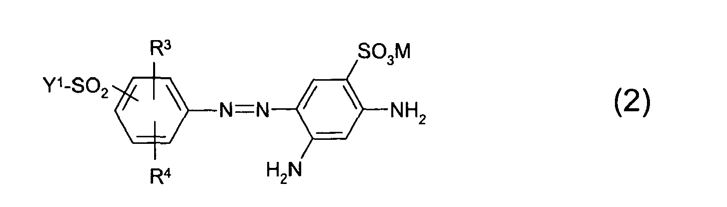 where:
M is hydrogen or an alkali metal;
m is 1, 2 or 3,
D is the radical of benzene or of naphthalene;
Y¹ is vinyl or is ethyl substituted in the β-position by an alkali-eliminable substituent;
R¹ is hydrogen, alkyl of 1 to 4 carbon atoms, alkoxy of 1 to 4 carbon atoms or sulfo;
R² is amino or unsubstituted alkyl of 1 to 4 carbon atoms or alkyl of 1 to 4 carbon atoms substituted by carboxyl, sulfo or by a group
-SO₂ - Y₂
where Y² has one of the meanings of Y¹,
R³ is hydrogen, chlorine, alkyl of 1 to 4 carbon atoms, alkoxy of 1 to 4 carbon atoms or sulfo,
R⁴ is hydrogen, alkyl of 1 to 4 carbon atoms or alkoxy of 1 to 4 carbon atoms,
Z is a fiber-reactive radical from the series of the halopyrimidines, of the dichloroquinoxalines or of the halotriazines which optionally bears a radical of the general formula
-NR⁵-B-SO₂ - Y
where
R⁵ is hydrogen or C₁-C₄ alkyl,
B is C₂-C₄-alkylene, or a C₄-C₆ alkylene with or without heteroatom interruption, or phenylene, and
Y has one of the meanings of Y¹.

2. The dye mixtures according to claim 1 which comprise a dye of the hereinbelow indicated and defined general formula (1) and a dye of the hereinbelow indicated and defined general formula (2) 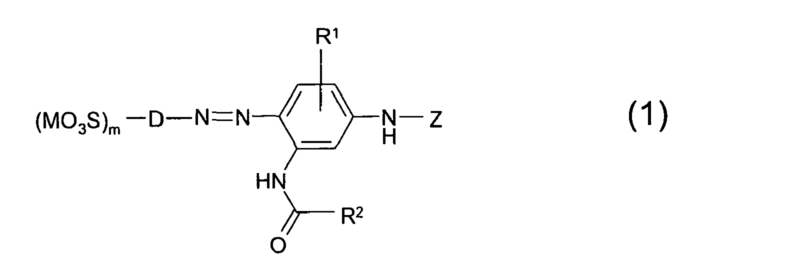 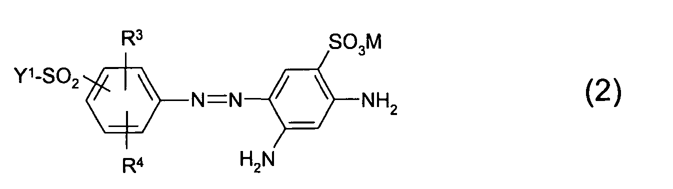
M is hydrogen or sodium, potassium or lithium;
D is the radical of benzene or of naphthalene;
m is 2 or 3;
Y¹ is vinyl or is ethyl substituted in the β-position by chlorine, sulfato, thiosulfato or phosphato, or acetyloxy, and sulfobenzoyloxy,
R¹ is hydrogen, alkyl of 1 to 4 carbon atoms, alkoxy of 1 to 4 carbon atoms or sulfo;
R² is amino or unsubstituted alkyl of 1 to 4 carbon atoms or alkyl of 1 to 4 carbon atoms substituted by carboxyl, sulfo or by a group
- SO₂ - Y²
where Y² has one of the meanings of Y¹,
R³ is hydrogen, methyl, methoxy, ethoxy, chlorine or sulfo,
R⁴ is hydrogen, alkyl of 1 to 4 carbon atoms or alkoxy of 1 to 4 carbon atoms,
Z is a fiber-reactive radical from the series of the halopyrimidines, of the dichloroquinoxalines or of the halotriazines which optionally bears a radical of the general formula
-NR⁵-B-SO₂ - Y
where
R⁵ is hydrogen or C₁-C₄ alkyl,
B is C₂-C₄-alkylene, or a C₄-C₆ alkylene with or without heteroatom interruption, or phenylene, and
Y has one of the meanings of Y¹.

3. The dye mixture according to claim 1 or 2 wherein
R² is methyl or amino,
R³ is hydrogen, methyl, methoxy or chlorine,
R⁴ is hydrogen and
Y¹ is vinyl or β-sulfatoethyl.

4. The dye mixture according to claim 1 or 2 wherein R¹ is para to the -NH-COR² group.

5. The dye mixture according to at least one of claims 1 to 4 wherein said dye (1) and said dye (2) are present in a molar mixing ratio in the range from 80:20 to 60:40.

6. Use of a dye mixture of claim 1 for dyeing and printing hydroxyl- and/or carboxamido-containing material, in particular fiber material.

7. A process for dyeing hydroxyl- and/or carboxamido-containing material, in particular fiber material, which comprises one or more dyes being applied to the material and fixed on the material by means of heat or with the aid of an alkaline agent or by means of both measures, wherein a dye mixture of claim 1 is utilized as dyes.

8. Aqueous printing inks for textile printing by the ink jet process, comprising one or more dye mixtures of claims 1 to 5 in amounts from 0.01 % by weight to 40% by weight based on the total weight of the inks.

9. Aqueous printing inks for textile printing by the ink jet process according to claim 8, comprising from 1 % to 40% of organic solvents based on the total weight of the ink.

10. Aqueous printing inks for textile printing by the ink jet process according to claim 9, comprising from 10% to 30% of organic solvents based on the total weight of the ink.

11. A process for printing textile fiber materials by the ink jet process, which comprises utilizing one of the inks mentioned in the above claims.

12. Native or regenerated cellulosic fibers, leather, wool, silk, polyamide fibers or polyurethane fibers digitally printed with the inks mentioned in the above claims.

## Revendications

1. Mélanges de colorants contenant un colorant ayant la formule générale (1) indiquée et définie ci-après : 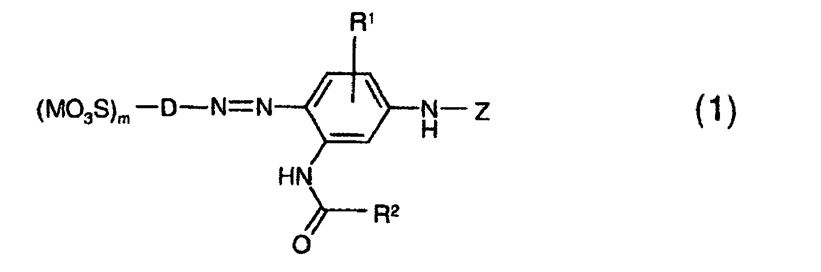 et un colorant ayant la formule générale (2) indiquée et définie ci-après : 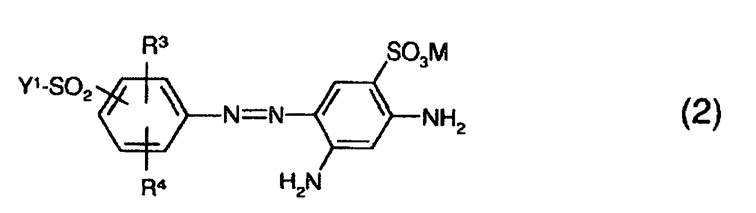 dans lesquelles :
M est un atome d'hydrogène ou un métal alcalin ;
m est le nombre 1, 2 ou 3 ;
D est le résidu du benzène ou du naphtalène;
Y¹ est le groupe vinyle ou éthyle, qui est substitué en position β par un substituant éliminable dans des conditions alcalines ;
R¹ est un atome d'hydrogène, un groupe alkyle ayant 1 à 4 atomes de carbone, alcoxy ayant 1 à 4 atomes de carbone ou sulfo ;
R² est un groupe amino ou alkyle ayant 1 à 4 atomes de carbone, ou alkyle ayant 1 à 4 atomes de carbone, substitué par un groupe carboxy, sulfo ou -SO₂-Y², Y² ayant l'une des significations de Y¹ ;
R³ est un atome d'hydrogène, un groupe chloro, alkyle ayant 1 à 4 atomes de carbone, alcoxy ayant 1 à 4 atomes de carbone, ou sulfo ;
R⁴ est un atome d'hydrogène ou un groupe alkyle ayant 1 à 4 atomes de carbone ou alcoxy ayant 1 à 4 atomes de carbone ;
Z est un radical réactif sur les fibres, de la série des halogénopyrimidines, des dichloroquinoxalines ou des halogénotriazines, qui éventuellement porte un radical de formule générale -NR⁵-B-SO₂-Y, où R⁵ est un atome d'hydrogène ou un groupe alkyle en C₁-C₄, B est un groupe alkylène en C₂-C₄ ou un groupe alkylène en C₄-C₆ éventuellement interrompu par un hétéroatome, ou un groupe phénylène, et Y a l'une des significations de Y¹.

2. Mélanges de colorants selon la revendication 1, contenant un colorant ayant la formule générale (1) indiquée et définie ci-après,
et un colorant ayant la formule générale (2) indiquée et définie ci-après : 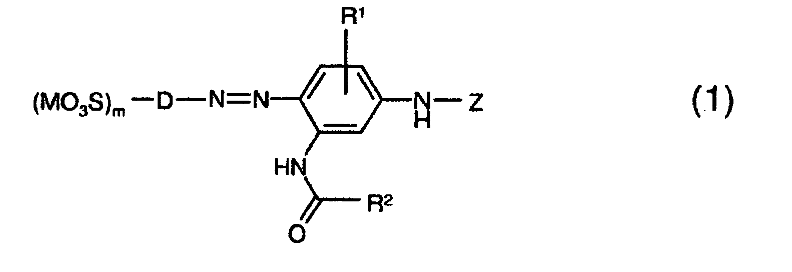 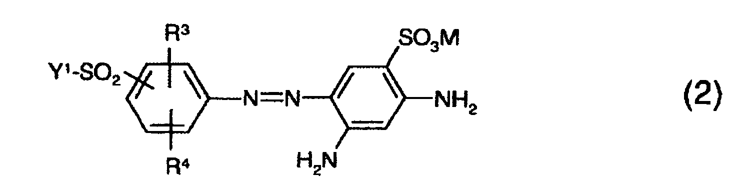
M est un atome d'hydrogène ou le sodium, le potassium ou le lithium ;
D est le résidu du benzène ou du naphtalène;
m est le nombre 2 ou 3 ;
Y¹ est le groupe vinyle ou éthyle, qui en position β est substitué par un substituant chloro, sulfato, thiosulfato, phosphato, ou le groupe acétyloxy, ou le groupe sulfobenzoyloxy ;
R¹ est un atome d'hydrogène, un groupe alkyle ayant 1 à 4 atomes de carbone, alcoxy ayant 1 à 4 atomes de carbone ou sulfo ;
R² est un groupe amino ou alkyle ayant 1 à 4 atomes de carbone, ou un groupe alkyle substitué par un groupe carboxy, sulfo ou un groupe -SO₂-Y², Y² ayant l'une des significations de Y¹ ;
R³ est un atome d'hydrogène ou le groupe méthyle, méthoxy, éthoxy, chloro ou sulfo ;
R⁴ est un atome d'hydrogène ou un groupe alkyle ayant 1 à 4 atomes de carbone ou alcoxy ayant 1 à 4 atomes de carbone ;
Z est un radical réactif sur les fibres de la série des halogénopyrimidines, des dichloroquinoxalines ou des halogénotriazines, qui porte éventuellement un radical de formule générale -NR⁵-B-SO₂-Y dans laquelle R⁵ est un atome d'hydrogène ou un groupe alkyle en C₁-C₄, B est un groupe alkylène en C₂-C₄ ou un groupe alkylène en C₄-C₆ éventuellement interrompu par un hétéroatome, ou phénylène, et Y a l'une des significations de Y¹.

3. Mélange de colorants selon la revendication 1 ou 2, dans lequel
R² est le groupe méthyle ou amino,
R³ est un atome d'hydrogène ou le groupe méthyle, méthoxy ou chloro,
R⁴ est un atome d'hydrogène, et
Y¹ est le groupe vinyle ou β-sulfatoéthyle.

4. Mélange de colorants selon la revendication 1 ou 2, dans lequel R¹ est en position para par rapport au groupe -NH-CO-R².

5. Mélange de colorants selon au moins l'une des revendications 1 à 4, **caractérisé en ce que** le colorant (1) et le colorant (2) sont présents selon un rapport de mélange en moles de 80:20 à 60:40.

6. Utilisation d'un mélange de colorants selon la revendication 1 pour la teinture et l'impression d'un matériau contenant des groupes hydroxy et/ou carboxamido, en particulier un matériau fibreux.

7. Procédé de teinture d'un matériau contenant des groupes hydroxy et/ou carboxamido, en particulier un matériau fibreux, dans lequel on applique sur le matériau un ou plusieurs colorants, et on les fixe sur le matériau à l'aide de chaleur, ou à l'aide d'un agent à effet alcalin, ou par ces deux mesures, **caractérisé en ce qu'**on utilise en tant que colorants un mélange de colorants selon la revendication 1.

8. Encres d'imprimerie aqueuses pour l'impression textile par le procédé au jet d'encre, **caractérisées en ce qu'**elles contiennent un ou plusieurs mélanges de colorants selon les revendications 1 à 5 en des quantités de 0,01 à 40 % en poids par rapport au poids total des encres.

9. Encres d'imprimerie aqueuses pour l'impression textile par le procédé au jet d'encre selon la revendication 8, **caractérisées en ce qu'**elles contiennent 1 à 40 % de solvants organiques, par rapport au poids total de l'encre.

10. Encres d'imprimerie aqueuses pour l'impression textile par le procédé au jet d'encre selon la revendication 9, **caractérisées en ce qu'**elles contiennent 10 à 30 % de solvants organiques, par rapport au poids total de l'encre.

11. Procédé d'impression de matériaux fibreux textiles par le procédé au jet d'encre, **caractérisé en ce qu'**on utilise l'une des encres mentionnées dans les revendications ci-dessus.

12. Fibres de cellulose natives ou régénérées, cuir, laine, soie, fibres de polyamide ou de polyuréthanne, qui ont subi une impression numérique avec les encres mentionnées dans les revendications ci-dessus.
